# EUROPEAN PATENT APPLICATION

(11) **EP 3 660 364 A1**
(43) Date of publication of application: **03.06.2020**
(21) Application number: 19203993.1
(22) Date of filing: 18.10.2019
(51) Int. Cl.: F16K 5/06, E03B 7/07, F16K 5/12, F16K 37/00, G01D 4/00, G01F 15/06

(54) **REMOTE CONTROL VALVE FOR WATER METERS CONTROL**

(30) Priority: 30.11.2018 IT 201800003857 U
(71) Applicant: Integraa SAS di Miraglia Giuseppe & C, 35030 Rubano (PD) (IT)
(72) Inventor: Miraglia, Giuseppe, 35030 Rubano (PD) (IT)
(74) Representative: Conversano, Gabriele

(57) **Abstract**

Motorized hydraulic valve for using at a user connection point to a water supply network, comprising:
- a shutter controlled by an electric motor;
- at least a sensor configured to acquire information concerning the position of said shutter;
- supply means of said electric motor and said sensor;
- communication means configured to allow the transmission of data to a remote server and the reception of commands from said remote server;
- control electronic means, configured to acquire the information detected by said sensor, to control said electric motor and to control said communication means;
- a case of suitable isolating class;
said electronic means being configured to control said electric motor to limit the water flowrate which can be supplied to said user as a function of a command received from said remote server.

## Description

Object of the present invention is a remote-controlled hydraulic valve optimized for using with water meter.

Yet, another object of the present invention is a method for controlling a water user, which, by means of the valve according to the invention, allows its remote partialization and closure.

At the state of the art, it is known that the connection of a user to the drinking water supply networks occurs at connection points where a meter and a shut-off valve are provided, which are apt to measure the user consumption and to allow a correct billing.

Therefore, a supply network provider is interested in being able to limit the water flowrate supplied to people in arrears so to limit economic losses and at the same time to induce the client to straighten out his own economic position so to reestablish the water flowrate available for his own user.

Another problem connected to the management of water supply networks is to partialize the flowrate supplied, or the water availability times in periods of limited water availability (as for example particularly in summer).

Therefore, there exists the problem to provide a valve which allows an efficient and economic management of the connection of water users to drinking water supply networks, so that both consumption reading and regulation of available water flowrate are possible remotely and without a technician intervention.

Therefore, aim of the present invention is a remote-controlled hydraulic valve able to partialize at a desired level the water flowrate which can be supplied in a user connection point to a water supply network.

According to another aim, the present invention provides a remote-controlled hydraulic valve having a shutter optimized in order that the same functions at low flowrates.

Yet, according to another aim the present invention provides a meter comprising a remote-controlled hydraulic valve.

The invention reaches the prefixed aims since it is a motorized hydraulic valve for using at a user connection point to a water supply network, comprising:
- a shutter controlled by an electric motor;
- at least a sensor configured to acquire information concerning the position of said shutter;
- supply means of said electric motor and said sensor;
- communication means configured to allow the transmission of data to a remote server and the reception of commands from said remote server;
- control electronic means, configured to acquire the information detected by said sensor, to control said electric motor and to control said communication means;
- a case of suitable isolating class;
   said electronic means being configured to control said electric motor to limit the water flowrate which can be supplied to said user as a function of a command received from said remote server.

More in particular, the valve according to the invention is motorized and is provided with communication means which allow the transmission of data to a remote server and the reception of commands. The data transmitted can comprise information concerning the status of functioning of the same valve, detected by a suitable sensor, in addition to the information of the meter reading, in case the valve is integrated inside the meter. Without this being limiting for the aims of the present invention, different communication protocols given between those known at the state of the art can be used (MBUS, Lora, RS485, NB-IOT). Moreover, the valve comprises conveniently local control means, which allow its control by an operator, manually (for example by means of one or more buttons) or by means of electronic tools (for example an infrared remote control). The valve comprises also a display configured to show the operator the information concerning the status of the valve functioning.

Communication means, sensor, motor, local control means and display are controlled by a suitable micro-controller, and all the components are supplied by a battery and enclosed inside a case of suitable isolating class.

In a preferred embodiment, said valve is arranged at the connection point to the water supply network of a user. Said valve can be possibly connected to the meter and configured to acquire from said meter the information concerning the water consumption and to transmit it to said remote server. The valve according to the invention is also configured to receive from said remote server a command signal on the basis of which the water supply is partialized or not. The valve is conveniently associated to a computer program, loaded on remote computer means (server) configured to control the valve remotely.

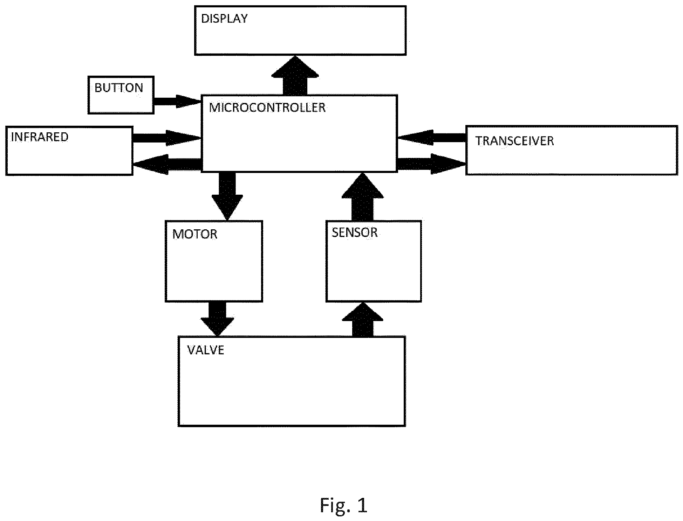

A preferred embodiment of the valve according to the invention will be described in the following with reference to figures 1 to 4.

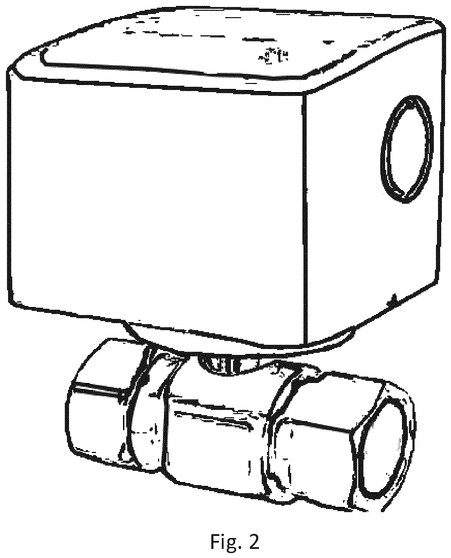

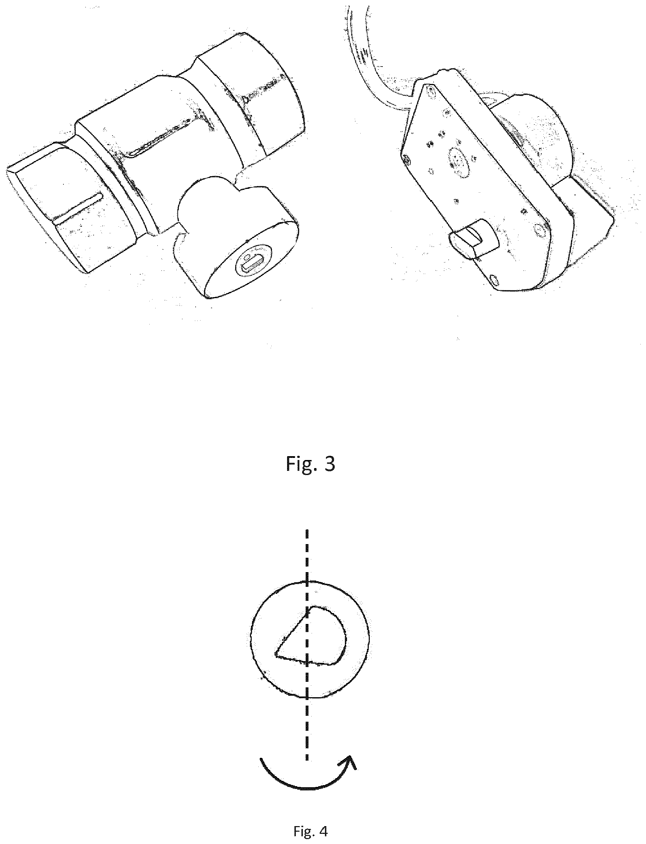

In figure 1 it is shown a block diagram of the valve components and their reciprocal interaction; in the following figures 2 and 3 there are shown, only as a way of example, some views of a preferred embodiment of the valve; in figure 4 it is shown an embodiment of the shutter of the valve according to the invention.

### Functioning principle

According to a preferred embodiment shown in the appended figures 2 and 3, the valve (10) according to the invention is a ball valve, comprising a shutter having spherical shape provided with a through hole, and the motor (20) is arranged on the topo of the same, with axis coincident with the rotation axis of the ball shutter and directly connected to the same by means of a suitable transmission shaft to reduce dimensions.

Between motor and transmission shaft there are possibly provided suitable transmission means (30), such for example a gear wheels transmission to reduce torque required to the electric motor. According to figure 4, the through hole of the shutter of the valve according to the invention can be realized with shape having "V" profile. The angle opening of the "V" hole determines the correspondence law between rotation angle of the shutter and flowrate regulated by the valve, thus allowing to realize valves having a finer regulation at low flowrates with respect to traditional ball valves with through hole with circular section.

As yet said, the valve comprises a micro-controller which manages the inlet/outlet blocks. The transceiver receives opening/closing commands remotely and transmits them to the micro-controller which actuates a motor which brings the hydraulic valve in the needed position.

A position sensor detects the position of the valve and transmits it to the micro-controller. Once the required position is reached, the micro-controller sends a message to the transceiver which transmits the result to the remote server.

By pressing the button the micro-controller is asked to visualize on the display information such for example series number, battery level, status of the valve, time etc. The infrared port (provided both with LED transmitter and transistor receiver) allows in loco, with an outer device, to ask the micro-controller to open/close the valve.

Finally, the micro-controller is programmed to send the status of the valve to the remote server according to regular intervals generally of 12 hours. This allows to intervene in case of tampering, anomalies etc.

Without this being limiting for the aims of the invention, in the following it is given a table which sums up the technical specifications of the valve realized in various dimensions.

| Size | DN15 | DN20 | DN25 |
|---|---|---|---|
| L(mm) | 64 | 70 | 70 |
| W(mm) | 78 | 78 | 78 |
| H(mm) | 114 | 118 | 121 |
| Pipe Joint | R1/2 | R3/4 | R1 |
| Weight(Kg) | 0.45 | 0.52 | 0.61 |
| Power Supply | 3.6VDC | | |
| Static Current | <10µA | | |
| Valve On/Off | > 20000 times | | |
| Max Pressure | ≤1.0MPa | | |
| Protection Class | IP68-1 m | | |
| Measuring Medium | Water | | |
| Water Temperature | (0.1∼50) °C | | |
| Ambient Temperature | (-25∼55) °C | | |

Object of the present invention is also a method for remote controlling a plurality of users connected to a water supply network, in which a valve of the just described type is mounted at the connection point of each user, comprising the steps of:
- associating an identifier code to each user;
- associating a supply level to each user;
- controlling each valve associated to each user so to be positioned at an opening level as a function of said supply level assigned to respective user;
- updating periodically the supply level associated to each user.

Without this being limiting the aim of the invention, said supply level can be set preferably on at least three values: completely open valve, partialized valve, completely closed valve. Moreover, preferably, each user will be associated to "partialized" level so to reduce the maximum water flowrate which can be supplied, after periods of water shortage or after lack of payment of bills for the supplied service.

The "completely closed" level can be conveniently used to interrupt the supply to those users for which the supply contract is expired.

## Claims

1. Motorized hydraulic valve for using at a user connection point to a water supply network, comprising:
- a shutter controlled by an electric motor;
- at least a sensor configured to acquire information concerning the position of said shutter;
- supply means of said electric motor and said sensor;
- communication means configured to allow the transmission of data to a remote server and the reception of commands from said remote server;
- control electronic means, configured to acquire the information detected by said sensor, to control said electric motor and to control said communication means;
- a case of suitable isolating class;
said electronic means being configured to control said electric motor to limit the water flowrate which can be supplied to said user as a function of a command received from said remote server.

2. Motorized hydraulic valve for using at a user connection point to a water supply network according to claim 1, further comprising local control means, which allow its control by an operator manually or by means of electronic tools, and a display configured to show the operator the information concerning the status of the valve functioning.

3. Motorized hydraulic valve for using at a user connection point to a water supply network according to claim 1 or 2, **characterized in that** said shutter is a ball provided with a through hole, configured to rotate around a vertical axis, and the motor is arranged on the top of the same and it is configured to make said ball rotate around said vertical axis.

4. Motorized hydraulic valve for using at a user connection point to a water supply network according to claim 3, **characterized in that** said through hole is provided with a tapered end shaped as a "V", in order to allow a finer regulation at low flowrates.

5. Meter for measuring water consumption comprising a valve according to any one of the preceding claims, **characterized in that** the data transmitted by said communication means to said remote server comprise the information concerning the water consumption reading carried out by said meter.
